# EUROPÄISCHE PATENTSCHRIFT

(11) **EP 3 974 821 B1**
(45) Veröffentlichungstag und Bekanntmachung des Hinweises auf die Patenterteilung: **08.03.2023**
(21) Anmeldenummer: 21198148.5
(22) Anmeldetag: 22.09.2021
(51) Int. Cl.: G01N 27/404

(54) **ELEKTROCHEMISCHER MEHRGASSENSOR**
ELECTROCHEMICAL MULTI-GAS SENSOR
CAPTEUR ÉLECTROCHIMIQUE À GAZ MULTIPLES

(30) Priorität: 29.09.2020 DE 102020125411
(43) Veröffentlichungstag der Anmeldung: 30.03.2022
(73) Patentinhaber: Dräger Safety AG & Co. KGaA, 23560 Lübeck (DE)
(72) Erfinder: Nauber, Andreas, 23558 Lübeck (DE); Sick, Michael, 23558 Lübeck (DE); Mattern-Frühwald, Marie-Isabell, 23558 Lübeck (DE); Ritz, Beate, 23558 Lübeck (DE)
(74) Vertreter: Guthöhrlein, Gerhard

(56) Entgegenhaltungen:
- DE-A1-102009 054 279
- US-A1- 2007 102 294
- US-A1- 2013 091 924
- US-A1- 2017 276 634

## Beschreibung

Gegenstand der Erfindung ist ein Mehrgassensor mit zumindest zwei Arbeitselektroden und zumindest einer Referenzelektrode, wobei die Referenzelektrode zwei leitend verbundene Einzelelektroden aus jeweils unterschiedlichem Elektrodenmaterial aufweist und die Arbeitselektrode und die Einzelelektroden vorzugsweise jeweils scheibenförmig und in zwei Stapeln übereinander angeordnet sind. Die Erfindung umfasst weiterhin ein Verfahren zur quantitativen oder qualitativen Bestimmung von zumindest zwei Zielgasen mit dem Mehrgassensor.

### Einführung und Stand der Technik

Elektrochemische Gassensoren werden auf vielfältige Weise in der analytischen qualitativen und quantitativen Gasmessung eingesetzt. An einer selektiv mit dem nachzuweisenden Gas reagierenden Messelektrode kommt es zu einer Umsetzung des Zielgases, die aufgrund ihrer Selektivität und ihrer Zugänglichkeit über eindeutig messbare elektrische Größen für qualitative und quantitative Aussagen herangezogen werden kann. Übliche elektrochemische Gassensoren weisen mehrere Elektroden auf, die über einen Elektrolyten miteinander kommunizieren. In einer Minimalkonfiguration weist ein elektrochemischer Gassensor eine Messelektrode und eine Gegenelektrode auf. In einer erweiterten, oft als Dreielektroden-Sensor bezeichneten Version, kommt zu dieser Konfiguration eine Referenzelektrode hinzu. Die Elektroden werden von einem Elektrolyten umschlossen.

Elektrochemische Mehrgassensoren sind vorgesehen, gleichzeitig zumindest zwei unterschiedliche Zielgase zu erfassen. Hierfür sind diese häufig mit unterschiedlichen Elektrodenmaterialien zur Messung der zumindest zwei Zielgase ausgestattet. So kann z.B. bei einem H₂S/Kohlenmonoxid-Sensor die H₂S-Arbeitselektrode aus Iridium und die Kohlenmonoxid-Arbeitselektrode aus Platin sein. In der Regel wird für die beiden unterschiedlichen Arbeitselektroden aber nur eine Referenzelektrode eingesetzt.

Das elektrochemisch wirksame Material der Referenzelektrode besteht dann in der Regel entweder aus Iridium oder aus Platin oder aus einem Gemisch von Iridium oder Platin, wobei die beiden Metalle dann gleichzeitig auf die Oberfläche der Referenzelektrode aufgebracht sind. Umfasst die Referenzelektrode gleichzeitig Iridium und Platin, dann bildet sich ein Mischpotential aus.

Ein Beispiel für kommerziell erhältliche Mehrgassensoren ist z.B. in der DE 102004059280 B genannt, die die gleichzeitige Messung von zwei toxischen Gasen, nämlich CO und H₂S, mittels Mehrgassensoren in sehr kleiner Bauform in handlichen, tragbaren Geräten ermöglicht. Ein weiterer Mehrgassensor und dessen Elektrodenanordnung ist in der DE 102009010773 B3 offenbart. Dort sind die Referenzelektroden jeweils nicht leitend verbunden. Weitere Beispiele sind US 2017/276634 und US 2013/091924. Sie offenbaren Mehrgassensoren mit zwei Referenzelektroden und zwei Arbeitselektroden. Die Arbeitselektroden weisen unterschiedliche Elektrodenmaterialien auf und die Referenzelektroden sind leitend verbunden.

Es ist bekannt, dass Störgase die Sensorperformance negativ beeinflussen können. So wird z.B. bei Gegenwart von Ethanol das Potential der Platin-Referenzelektrode besonders stark beeinflusst. Das Potential wird ins Negative verschoben und kommt in den Bereich der Sauerstoffreduktion, d.h. bei Anwesenheit von Luftsauerstoff zeigt der Sensor negativ an. Dies ist in einem Bereich, in dem der Sensor die Zielgase detektieren soll, nicht erwünscht.

In Umgebungen, in denen häufig mit Desinfektionsmitteln gearbeitet wird, ist die Umgebungsluft regelmäßig mit Ethanol oder anderen Alkoholen wie Isopropanol angereichert. Bei der Verwendung von alkoholischem Desinfektionsmittel kommt es zu einer Beeinflussung des Referenzelektroden-Potentials, obwohl kein Zielgas anwesend ist. Besonders für Platin- bzw. Platin-Kohlenstoff- Elektroden tritt dies auf. Bei der Verwendung von einer Mischmetall-Referenzelektrode aus Platin und Iridium für beide Zielgase kann es bei einem Eintrag vom Ethanol dazu kommen, dass das Ethanol als Störgas an der nicht reaktiven Arbeitselektrode, wie z.B. Iridium, welches Alkohole weder elektrochemisch noch katalytisch umsetzt, vorbeiströmt und ungehindert die Referenzelektrode erreicht, die einen Anteil Platin enthält, an dem sich das Ethanol umsetzen kann. Die Umsetzung führt dann zu einer Potentialverschiebung, die den Messwert verfälscht und auch längerfristig eine Veränderung der Sensorperformance bewirken kann.

Das zweite technische Problem ist, dass es bei plötzlichen Temperaturänderungen zu transienten Signalen kommen kann, da die Elektrodenmaterialen unterschiedliche Temperaturkoeffizienten aufweisen. Wenn Arbeitselektrode und Referenzelektrode aus unterschiedlichen Materialien sind, gleichen sich die kapazitiven Umladungsströme, die durch Temperaturänderungen hervorgerufen werden, nämlich nicht aus. Dadurch kommt es zu den transienten Signalen.

Besonders bei sehr kleinen oder planaren Sensoren mit kleinen Abständen zwischen den Komponenten und kleinen Elektroden tritt dieser Effekt auf, da eine Temperaturänderung in der Umgebung schnell auf die Referenzelektrode durchschlagen kann, da diese dann von Temperatureinflüssen wenig abgeschirmt ist. Bei kleinen Elektroden und kurzen Abständen im elektrochemischen System zwischen Membranen und Elektroden kann es so schnell zu einer Temperaturänderung an der Referenzelektrode kommen. Dies wirkt sich in einem ungewollten Signaleffekt aus. Dieser Effekt wirkt dem Bestreben zur Miniaturisierung von Sensoren entgegen.

### Aufgabe der Erfindung

Aufgabe der vorliegenden Erfindung ist es, ein Messverfahren und eine Messvorrichtung bereitzustellen, die bei Anwesenheit von Störgasen zuverlässig zumindest zwei unterschiedliche Zielgase nachweist und den Einfluss von Störgasen minimiert, insbesondere die Beeinflussung der Nullsignale. Weiterhin ist erwünscht, dass der Sensor bei einer schlagartigen Temperaturänderung, z.B. einer Temperaturänderung oberhalb von 20°K in einer Minute, eine möglichst geringe transiente Anzeige aufweist.

### Zusammenfassung der Erfindung

Diese und andere Aufgaben werden mit dem erfindungsgemäßen Mehrgassensor gemäß Anspruch 1 gelöst. Bevorzugte Ausführungsformen sind Gegenstand der Unteransprüche und/oder nachfolgend beschrieben.

Der erfindungsgemäße Mehrgassensor umfasst:
- ein Gehäuse mit zumindest einem Gaseinlass, vorzugsweise einem ersten und einem zweiten Gaseinlass,
- eine erste Arbeitselektrode aus einem ersten Elektrodenmaterial,
- eine zweite Arbeitselektrode aus einem zweiten Elektrodenmaterial, wobei das zweite Elektrodenmaterial unterschiedlich vom ersten Elektrodenmaterial ist,
- zumindest eine Referenzelektrode, wobei die zumindest eine Referenzelektrode eine erste Einzelelektrode aus dem ersten Elektrodenmaterial und getrennt hiervon eine zweite Einzelelektrode aus dem zweiten Elektrodenmaterial aufweist und beide Einzelelektroden elektrisch leitend verbunden sind,
- einen Elektrolyten im Inneren des Gehäuses, wobei der Elektrolyt jeweils zumindest mit dem ersten Elektrodenmaterial der ersten Arbeitselektrode, dem zweiten Elektrodenmaterial der zweiten Arbeitselektrode und den Elektrodenmaterialien der beiden Einzelelektroden der Referenzelektrode in Kontakt steht,
wobei die erste Arbeitselektrode zwischen dem zumindest einem Gaseinlass, insbesondere dem ersten Gaseinlass, und der ersten Einzelelektrode der Referenzelektrode angeordnet ist.

Vorzugsweise ist pro Arbeitselektrode zumindest ein Gaseinlass vorgesehen. Erster und zweiter Gaseinlass, wenn vorhanden, sind parallelgeschaltet. Weiterhin ist eine Gegenelektrode vorhanden. Vorzugsweise ist auch die zweite Arbeitselektrode zwischen dem ersten oder wenn vorhanden zweiten Gaseinlass und der zweiten Einzelelektrode der Referenzelektrode angeordnet.

Die Erfindung umfasst weiterhin ein Verfahren zur quantitativen oder qualitativen Bestimmung von zumindest zwei Zielgasen mit dem Mehrgassensor, wobei die Messung vorzugsweise amperometrisch erfolgt.

### Detaillierte Beschreibung der Erfindung

Die Elektrodenmaterialien bestehen aus oder enthalten z.B. Platin, Iridium, Palladium, Rhodium, Gold und/oder Kohlenstoff, z.B. in der Form von Platin/Kohlenstoff, Kohlenstoff-Nanotubes, aus dotiertem Diamant oder diamantartigem Kohlenstoff. Vorzugsweise bestehen die Elektrodenmaterialien jeweils aus einem Stoff/Metall, d.h. sie sind einheitlich und z.B. keine Mischungen oder Legierungen. Insbesondere besteht das erste Elektrodenmaterial aus Platin oder enthält Platin.

Typische Vertreter der Zielgase sind CO, H₂S, O₂, SO₂, NO₂, NH₃, HCN, Cl₂, HCl, HF, CO₂, PH₃, NO und weitere.

Zielgas und/oder Gas meint vorliegend ein Molekül im gasförmigen Aggregatzustand, umfasst aber auch Aerosole oder Dämpfe.

Der Elektrolyt kann eine anorganische wässrige Säure wie Schwefelsäure sein, eine Salzlösung enthaltend z.B. LiCl oder LiBr oder eine Ionische Flüssigkeit. Ionische Flüssigkeiten sind Schmelzen von Salzen, die bereits bei Temperaturen unter 100°C flüssig sind. Beispiele für verwendete Kationen sind alkylierte Imidazolium-, Pyridinium-, Ammonium- oder Phosphonium-Ionen. Typische Anionen sind z.B. Halogenide, Tetrafluoroborat, Trifluoromethansulfonimid, Trifluoracetat, Trifluormethansulfonat, Triflate, Hexafluorophosphate, Phosphinate und Tosylate.

Durch die Auswahl der Kombination aus Elektrolyt und Elektrodenmaterial lassen sich Mehrgassensoren zur selektiven Messung unterschiedlicher Gase aufbauen. Beispiele geeigneter Kombinationen sind in nachfolgender Tabelle 1 aufgeführt, wobei das Elektrodenmaterial der Arbeitselektrode und der zugehörigen Einzelelektrode jeweils gleich sind:

**Tabelle 1**

| | erstes Elektrodenmaterial | erstes Zielqas | zweites Elektrodenmaterial | zweites Zielgas | Elektrolyt |
|---|---|---|---|---|---|
| (1) | Platin | CO | Iridium | H₂S | wässrige H₂SO₄ |
| (2) | Platin | CO | Gold | SO₂ | wässrige H₂SO₄ |
| (4) | Iridium | H₂S | Gold | SO₂ | wässrige H₂SO₄ |
| (5) | Platin | CO | Gold | HCN | wässrige H₂SO₄ |
| (6) | Iridium | H₂S | Gold | HCN | wässrige H₂SO₄ |
| (7) | Kohlenstoff | NO | Gold | NO₂ | wässrige H₂SO₄ |

Das Material der Gegenelektrode ist beliebig. Auch die Gegenelektrode steht mit dem Elektrolyten in Verbindung.

Zumindest eine Arbeitselektrode verursacht nach einer Ausführungsform ein Störsignal, wenn z.B. ein Alkohol wie Ethanol an die Referenzelektrode gelangt. Die zumindest eine Arbeitselektrode, hier die erste Arbeitselektrode, ist die Arbeitselektrode deren Elektrodenmaterial, wenn auch auf der Referenzelektrode eingesetzt, das Störsignal verursacht.

Vorteilhafterweise ist in gleicher Weise auch die zweite Arbeitselektrode ebenso zwischen Gaseinlass, insbesondere zweitem Gaseinlass, und der zugehörigen Einzelelektrode der Referenzelektrode angeordnet, die das zweite Elektrodenmaterial aufweist, auch wenn dieses zweite Elektrodenmaterial kein Störsignal auslöst.

Die Arbeitselektroden und die Referenzelektrode haben vorzugsweise eine Scheibenform. Die Arbeitselektroden und die Referenzelektrode und/oder die Einzelelektroden, die die Referenzelektrode bilden, können z.B. als Dickschichtelektroden auf einer PTFE -Folie ausgebildet sein, z.B. mit einer Schichtdicke / Stärke von 50 µm bis 400 µm, bevorzugt 100 bis 250 µm, des Elektrodenmaterials. In einer weiteren Ausführungsform ist die Elektrode aus einer gesputterten PTFE -Folie z.B. mit einer Schichtdicke / Stärke des Elektrodenmaterials von 50 nm bis 500 nm.

Das Elektrodenmaterial der Einzelelektroden kann nach einer Ausführungsform in einem mittleren Stärken-/Dickenverhältnis von erster zu zweiter Einzelelektrode von 1 : 1,5 bis 1 : 2,5 stehen.

Die beiden Einzelelektroden der Referenzelektrode sind voneinander räumlich separiert und leitend miteinander verbunden (Elektronenleiter). Dies kann erfolgen, indem ein Leiter die Einzelelektroden elektrisch verbindet oder aber die Einzelelektroden selbst miteinander elektrisch leitend in Kontakt stehen. Z.B. kann ein Steg als Leiter vorgesehen sein, der die beiden Einzelelektroden verbindet. Der Steg und/oder der Leiter umfasst ein elektronenleitendes Material und ist nach einer Ausgestaltung gegenüber dem Elektrolyten isoliert. Dies kann z.B. in Form eines isolierend beschichteten Platindrahtes realisiert werden.

Nach einer anderen Ausgestaltung ist der elektronenleitende Steg aus dem ersten und dem zweiten Elektrodenmaterial oder einer Mischung von beiden Elektrodenmaterialien gebildet. Die Referenzelektrode kann z.B. die Form einer liegenden Acht, einer Hantel oder eines Knochens haben. Es ist aber bevorzugt, dass die Einzelelektroden der Referenzelektrode mit einem Leiter verbunden sind und die Einzelelektroden ansonsten nicht miteinander in Kontakt stehen und damit jede Einzelelektrode eine von der anderen Einzelelektrode unterschiedliche Form haben kann.

Einzelelektroden sind bevorzugt jeweils scheibenförmig. Einzelelektroden können z.B. eine Tellerform haben, wobei der Teller vorzugsweise jeweils auch die Form einer flachen Scheibe hat.

Insbesondere ist die wirksame Fläche, der ersten Einzelelektrode der Referenzelektrode, relativ zu der zugehörigen ersten Arbeitselektrode kleiner, vorzugsweise um zumindest 15 % und besonders bevorzugt um zumindest 30%.

Auch unabhängig hiervon ist insbesondere die Fläche der zweiten Einzelelektrode der Referenzelektrode relativ zu der zugehörigen zweiten Arbeitselektrode kleiner, vorzugsweise um zumindest 15 % und besonders bevorzugt um zumindest 30%. Die wirksame Fläche wird jeweils wie eine glatte Oberfläche geometrisch berechnet, also ohne z.B. eine Betrachtung der Rauigkeit, und ist die Fläche des Elektrodenmaterials der jeweiligen Elektrode, die mit dem Elektrolyten in Kontakt steht.

Die erste Einzelelektrode und die erste Arbeitselektrode weisen das gleiche Elektrodenmaterial auf. Dann weist die zweite Einzelelektrode und die zweite Arbeitselektrode untereinander jeweils gleiche aber verglichen mit der ersten Einzelelektrode und der ersten Arbeitselektrode unterschiedliche Elektrodenmaterialen auf.

Die Referenzelektrode wird insbesondere in direkter Nähe zu den Arbeitselektroden positioniert. Die Arbeitselektrode ist vorzugsweise größer als die zugeordnete Einzelelektrode der Referenzelektrode ausgebildet und weiter bevorzugt so angeordnet, dass sie - betrachtet in Diffusionsrichtung des durch den Gaseinlass eindringenden Zielgases - jeweils die Einzelelektrode der Referenzelektrode aus dem gleichen Elektrodenmaterial abschirmt, d.h. anders ausgedrückt die Arbeitselektrode liegt wie eine Art Schutzschild in Bezug auf die Diffusionsrichtung vor der jeweiligen Einzelelektrode der Referenzelektrode oder im Windschatten der zugehörigen Arbeitselektrode. Mit dem Zielgas in das Gehäuse des Mehrgassensors eindringendes Störgas diffundiert somit zuerst / nur an die Arbeitselektrode. Damit ist das Störgas an der Arbeitselektrode zwar auch elektrochemisch umgesetzt, so dass es zu einer kurzfristigen Anzeige des Sensors auf dieses Querempfindlichkeitsgas kommt, aber das Störgas kann, zumindest bei moderater Konzentration, nicht weiter bis zur Referenzelektrode durchdringen.

Insbesondere sind Arbeitselektrode, Einzelelektroden der Referenzelektrode und Gegenelektrode in einer Stapelanordnung aus Elektroden und jeweils dazwischen befindlichem Elektrolyt aufgebaut. Insbesondere sind die Elektroden flächig ausgebildet und jeweils planparallel zueinander ausgerichtet.

Die Einzelelektroden sind miteinander kontaktiert und bilden die Referenzelektrode und sind auf einen Referenzelektrodenanschluss geführt. Das sich einstellende Potential ist ein Mischpotential. Eine derartige Einstellung ist mit einer einzelnen Referenzelektrode, die keine Einzelelektroden aufweist, mit nur einem Elektrodenmaterial auch wenn im Gemisch nicht möglich. Das sich einstellende Potential kann durch die Durchmesser der Elektroden und die Dicke der Elektrodenmaterialschicht eingestellt werden. Wird z.B. ein möglichst geringer Temperatureffekt auf der H₂S Seite gewünscht, wird die Schichtdicke und/oder Durchmesser der H₂S Einzelelektrode erhöht. Die Schichtdicke und Größe der einzelnen Referenzelektroden haben einen positiven Einfluss auf den dynamischen Temperatureffekt, weil die kapazitiven Umladungsströme minimiert werden können.

Der Zwischenraum zwischen zwei Elektroden kann auch mit für den Elektrolyten durchlässigen Vlieslagen gefüllt sein. Dies gewährleistet die ständige und konstante Benetzung der aktiven Elektrodenbereiche mit Elektrolyt und macht den elektrochemischen Mischgassensor weniger lagesensitiv.

Das Gehäuse kann auch zumindest zwei räumlich separierte Kammern umfassen, wobei jeweils in einer Kammer das eine Paar von Arbeitselektrode und Einzelelektrode und in der weiteren/zweiten Kammer das weitere/zweite Paar von Arbeitselektrode und Einzelelektrode enthalten sind.

Die Einzelelektroden sind dann auch hier elektrisch leitend miteinander verbunden. In den Kammern sind gleiche oder unterschiedliche Elektrolyte enthalten, vorzugsweise unterschiedliche. In jeder Kammer ist eine Gegenelektrode enthalten, wobei die Gegenelektroden leitend miteinander verbunden sein können oder das Elektrodenmaterial der Gegenelektrode erstreckt sich durch die Trennwand, vorzugsweise abgedichtet gegen einen Durchtritt des Elektrolyten, in beide Kammern. Beide Kammern haben einen Gaseinlass. Das Gehäuse kann als eine Einheit mit zwei oder mehr Kammern ausgebildet sein oder die Kammern bilden jeweils getrennte Einheiten, so dass die Einheiten z.B. zusammensteckbar sind oder nebeneinander in einem weiteren Gehäuse gehaltert sind, zumindest sind aber die Kammern über die leitende Verbindung der Einzelelektroden miteinander verbunden. Ein Beispiel wäre ein Mehrgassensor für CO, 1. Kammer, Arbeits- und Einzelelektrode aus Platin, und NH₃, 2. Kammer, Arbeits- und Einzelelektrode aus Iridium, mit dem Elektrolyten wässrige H₂SO₄ in der ersten Kammer und dem Elektrolyten wässriges LiCl in der zweiten Kammer. Ebenso können zwei verschiedene ionische Flüssigkeiten in den beiden Kammern verwendet werden, z.B. für das Zielgas H₂S (1-Ethyl-3-methylimidazoliumacetat, kohlenstoffhaltige Arbeits- und Einzelelektrode) und für das Zielgas SO₂ (Butylpyridiniumchlorid, kohlenstoffhaltige Arbeits- und Einzelelektrode).

Um ausreichende Standzeiten beziehungsweise Unempfindlichkeit gegenüber Umgebungsfeuchteschwankungen und/oder Austrocknen zu erzielen, können in dem Gehäuse gesonderte Elektrolytvoluminakammern als Vorratsraum vorgesehen sein, mit denen die einzelnen Vlieslagen über saugfähige Verbindungen in Kontakt stehen.

Zur Absicherung des Sensors gegenüber möglicherweise auftretenden Druckschwankungen der Umgebung kann es vorteilhaft sein, wenn das Sensorgehäuse einen Gaseinlass für den Eintritt des zu messenden Gases aufweist, die mit der Sensorumgebung über ein pneumatisches Dämpfungselement kommuniziert. Auf diese Weise werden Druckschwankungen abgefangen, die zu einer Schädigung des Sensors beziehungsweise zu einer zeitweiligen Verfälschung des Messsignals führen könnten.

Die Kontaktierung der Elektroden und/oder der auslesbaren Mittel zur Speicherung sensorspezifischer Daten erfolgt in einem erfindungsgemäßen Sensor vorteilhafterweise über in das Sensorgehäuse einsteckbare Kontaktstifte, die in eingestecktem Zustand in festem Kontakt zu leitfähigen Verbindungsmitteln stehen, die zu den Elektroden und/oder auslesbaren Mitteln zur Speicherung sensorspezifischer Daten führen und mit diesen elektrisch verbunden sind.

Der Mehrgassensor ist vorzugsweise mit einem Bipotentiostaten ausgestattet. Die erste Elektrode ist dann die erste Arbeitselektrode des Bipotentiostaten und die zweite Elektrode die zweite Arbeitselektrode des Bipotentiostaten. Die erste und die zweite Arbeitselektrode haben eine gemeinsame Referenzelektrode und eine gemeinsame Gegenelektrode, die so positioniert sind, dass die Potentiale der ersten und der zweiten Arbeitselektrode unabhängig voneinander gesteuert werden können.

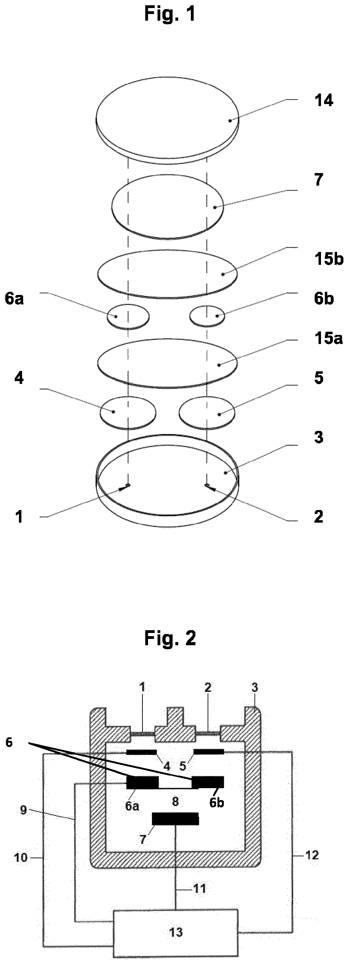

**Fig. 1** zeigt schematisch den Aufbau eines Mehrgassensors. Das Sensorgehäuse 3 umschließt zusammen mit dem Deckel 14 einen Elektrolytraum zur Aufnahme eines Elektrolyten 8, zum Beispiel Schwefelsäure. Das Gehäuse ist mit zwei Gaseinlässen 1,2 versehen, die z.B. in Form einer PTFE- Diffusionsmembran ausgebildet sind. Im Gehäuse sind in einer ersten Stapelanordnung, erster Gaseinlass 1, erste Arbeitselektrode 4, erste Einzelelektrode 6a der Referenzelektrode und Gegenelektrode 7 und in einer zweiten Stapelanordnung, zweiter Gaseinlass 2, zweite Arbeitselektrode 5, zweite Einzelelektrode 6b der Referenzelektrode und Gegenelektrode 7 jeweils planparallel zueinander / übereinander angeordnet.

Die beiden Einzelelektroden 6a, 6b und die Arbeitselektroden 4, 5 sind jeweils mittenaxial über der zugehörigen Durchtrittsöffnung für den Gaseinlass 1, 2 angeordnet. Die Einzelelektroden 6a, 6b haben jeweils einen kleineren Durchmesser als der Durchmesser der zugehörigen Arbeitselektroden 4, 5. Die erste Einzelelektrode 6a und die zweite Einzelelektrode 6b der Referenzelektrode sind leitend verbunden (nur in Fig. 2 dargestellt), so dass sich ein Mischpotential ergibt.

Zwischen den Elektroden findet sich jeweils ein flächiger Separator 15a, 15b, z.B. in der Form eines flächigen Glasvlieses. Der Separator 15a ist planparallel zu den beiden Arbeitselektroden 4, 5 angeordnet und beabstandet gleichzeitig einerseits die erste Arbeitselektrode von der ersten Einzelelektrode 6a der Referenzelektrode und andererseits die zweite Arbeitselektrode 5 von der zweiten Einzelelektroden 6b der Referenzelektrode 6. Auch der Separator 15b ist flächig ausgebildet, z.B. in der Form eines flächigen Glasvlieses und beabstandet die Einzelelektroden 6a, 6b der Referenzelektrode 6 von der Gegenelektrode 7.

In **Fig. 2** ist die Schaltung der Elektroden dargestellt. Die Arbeitselektroden 4,5 sind jeweils getrennt voneinander mit einem Potentiostat 13 verbunden, über Anschluss 10 der ersten Arbeitselektrode und Anschluss 12 der zweiten Arbeitselektrode. Die erste Einzelelektrode 6a der Referenzelektrode 6 ist mit der zweiten Einzelelektrode 6b der Referenzelektrode 6 über einen Leiter kurzgeschlossen. Die wirksame Fläche des Elektrodenmaterials der ersten Einzelelektrode 6a ist deutlich kleiner als die wirksame Fläche des Elektrodenmaterials der zugehörigen ersten Arbeitselektrode 4. Das Gleiche gilt für die wirksame Fläche des Elektrodenmaterials der zweiten Einzelelektrode 6b relativ zur wirksamen Fläche des Elektrodenmaterials der zugehörigen zweiten Arbeitselektrode 5. Unter der Referenzelektrode 6 befindet sich die Gegenelektrode 7, die ebenfalls mit dem Potentiostat 13 über Anschluss 11 verbunden ist, wie die erste Einzelelektrode 6a und die zweiten Einzelelektrode 6b der Referenzelektrode 6 gemeinsam über Anschluss 9. Die Separatoren 15a, 15b sind in Fig. 2 nicht dargestellt. Die Anordnung der Elektroden ist die Gleiche wie in Fig. 1, ausgenommen dass die Gegenelektrode 7 kleiner ist. Der Potentiostat ist als Bipotentiostat ausgebildet.

**Bezugszeichenliste**

| | | | | |
|---|---|---|---|---|
| 1 | erster Gaseinlass | | 8 | Elektrolyt |
| 2 | zweiter Gaseinlass | | 9 | Anschluss Referenzelektrode |
| 3 | Gehäuse | | 10 | Anschluss erste Arbeitselektrode |
| 4 | erste Arbeitselektrode | | 11 | Anschluss Gegenelektrode |
| 5 | zweite Arbeitselektrode | | 12 | Anschluss zweite Arbeitselektrode |
| 6 | Referenzelektrode | | 13 | Potentiostat |
| 6a | erste Einzelelektrode | | 14 | Deckel |
| 6b | zweite Einzelelektrode | | 15a | erster Separator |
| 7 | Gegenelektrode | | 15b | zweiter Separator |

## Patentansprüche

1. Mehrgassensor umfassend
• ein Gehäuse (3) mit zumindest einem Gaseinlass (1, 2),
• eine erste Arbeitselektrode (4) aus einem ersten Elektrodenmaterial,
• eine zweite Arbeitselektrode (5) aus einem zweiten Elektrodenmaterial, wobei das zweite Elektrodenmaterial unterschiedlich vom ersten Elektrodenmaterial ist,
• zumindest eine Referenzelektrode (6), wobei die Referenzelektrode (6) eine erste Einzelelektrode (6a) und getrennt hiervon eine zweite Einzelelektrode (6b) aufweist und beide Einzelelektroden elektrisch leitend verbunden sind,
• einen Elektrolyten (8) im Inneren des Gehäuses (3), wobei der Elektrolyt (8) jeweils mit dem ersten Elektrodenmaterial der ersten Arbeitselektrode (4), dem zweiten Elektrodenmaterial der zweiten Arbeitselektrode (5) und den Elektrodenmaterialien der beiden Einzelelektroden der Referenzelektrode (6) in Kontakt steht,
wobei die erste Arbeitselektrode (4) zwischen dem zumindest einem Gaseinlass (1, 2) und der ersten Einzelelektrode (6a) der Referenzelektrode (6) angeordnet ist,
**dadurch gekennzeichnet, dass**
die erste Einzelelektrode (6a) der Referenzelektrode (6) aus dem ersten Elektrodenmaterial und die zweite Einzelelektrode (6b) der Referenzelektrode (6) aus dem zweiten Elektrodenmaterial besteht.

2. Mehrgassensor nach Anspruch 1,
wobei die zweite Arbeitselektrode (5) zwischen dem Gaseinlass (1, 2) und der zweiten Einzelelektrode (6b) der Referenzelektrode (6) angeordnet ist,
wobei vorzugsweise das Gehäuse (3) einen ersten (1) und einen zweiten (2) Gaseinlass aufweist und
die erste Arbeitselektrode (4) zwischen dem ersten Gaseinlass (1) und der ersten Einzelelektrode (6a) der Referenzelektrode (6) angeordnet ist, die das erste Elektrodenmaterial aufweist, und
die zweite Arbeitselektrode (5) zwischen dem zweiten Gaseinlass (2) und der zweiten Einzelelektrode (6b) der Referenzelektrode (6), die das zweite Elektrodenmaterial aufweist, angeordnet ist.

3. Mehrgassensor nach zumindest einem der vorhergehenden Ansprüche,
wobei die beiden Elektrodenmaterialien unterschiedlich voneinander jeweils ausgewählt sind aus: Palladium, Iridium, Kohlenstoff, Platin und Rhodium,
wobei das erste Elektrodenmaterial vorzugsweise Platin ist.

4. Mehrgassensor nach zumindest einem der vorhergehenden Ansprüche,
wobei die erste Arbeitselektrode (4), die zweite Arbeitselektrode (5) und die beiden Einzelelektroden (6a, 6b) der Referenzelektrode (6) jeweils die Form einer Scheibe haben, insbesondere einer kreisförmigen oder ovalen Scheibe.

5. Mehrgassensor nach zumindest einem der vorhergehenden Ansprüche, wobei
a) der erste Gaseinlass (1), die erste Arbeitselektrode (4) und die erste Einzelelektrode (6a) und
b) der zweite Gaseinlass (2), die zweite Arbeitselektrode (5), und die zweite Einzelelektrode (6b),
übereinander angeordnet jeweils eine Stapelanordnung bilden.

6. Mehrgassensor nach Anspruch 5,
wobei eine Gegenelektrode (7) Teil beider Stapel ist und den Abschluss des jeweiligen Stapels bildet.

7. Mehrgassensor nach zumindest einem der vorhergehenden Ansprüche,
wobei die erste Arbeitselektrode (4) eine größere wirksame Fläche mit Elektrodenmaterial aufweist als die erste Einzelelektrode (6a), und vorzugsweise betrachtet von dem ersten Gaseinlass (1) die erste Arbeitselektrode (4) die erste Einzelelektrode (6a) überdeckt, insbesondere vollständig.

8. Mehrgassensor nach zumindest einem der vorhergehenden Ansprüche,
wobei die zweite Arbeitselektrode (5) eine größere wirksame Fläche mit Elektrodenmaterial aufweist als die zweite Einzelelektrode (6b) und vorzugsweise betrachtet von dem zweite Gaseinlass (2) die zweite Arbeitselektrode (5) die zweite Einzelelektrode (6b) überdeckt, insbesondere vollständig.

9. Mehrgassensor nach zumindest einem der vorhergehenden Ansprüche,
wobei die Einzelelektroden (6a, 6b) durch einen Leiter elektrisch verbunden sind und der Leiter vorzugsweise gegenüber dem Elektrolyten (8) isoliert ist und weiter bevorzugt aus Platin ist.

10. Mehrgassensor nach zumindest einem der vorhergehenden Ansprüche,
wobei das Elektrodenmaterial der Einzelelektroden (6a, 6b) eine mittlere Stärke von 50 - 400 µm, bevorzugt 100 bis 250 µm, aufweist.

11. Mehrgassensor nach zumindest einem der vorhergehenden Ansprüche,
wobei die wirksame Fläche der jeweiligen Einzelelektrode (6a, 6b) in Bezug auf die zugehörige Arbeitselektrode (4, 5) um zumindest 15%, vorzugsweise zumindest 30%, kleiner ist.

12. Mehrgassensor nach zumindest einem der vorhergehenden Ansprüche,
wobei der Mehrgassensor einen Bipotentiostaten (13) aufweist.

13. Mehrgassensor nach zumindest einem der vorhergehenden Ansprüche,
wobei das Gehäuse (3) zumindest zwei räumlich separierte Kammern umfasst,
wobei in den Kammern jeweils zumindest ein Gaseinlass (1, 2) und ein Paar von Arbeitselektrode (4, 5) und Einzelelektrode (6a, 6b) enthalten ist und vorzugsweise in den Kammern jeweils unterschiedliche Elektrolyte (8) enthalten sind.

14. Verfahren zur quantitativen oder qualitativen Bestimmung von zwei Zielgasen gleichzeitig nebeneinander mit dem Mehrgassensor nach zumindest einem der vorhergehenden Ansprüche, wobei die Zielgase vorzugsweise H₂S und CO sind.

## Claims

1. Multi-gas sensor comprising
• a housing (3) having at least one gas inlet (1, 2),
• a first working electrode (4) composed of a first electrode material,
• a second working electrode (5) composed of a second electrode material, wherein the second electrode material is different from the first electrode material,
• at least one reference electrode (6), wherein the reference electrode (6) comprises a first individual electrode (6a) and, separately therefrom, a second individual electrode (6b) and both individual electrodes are electrically conductively connected,
• an electrolyte (8) in the interior of the housing (3), wherein the electrolyte (8) is in each case in contact with the first electrode material of the first working electrode (4), the second electrode material of the second working electrode (5) and the electrode materials of the two individual electrodes of the reference electrode (6),
wherein the first working electrode (4) is arranged between the at least one gas inlet (1, 2) and the first individual electrode (6a) of the reference electrode (6),
**characterized in that**
the first individual electrode (6a) of the reference electrode (6) consists of the first electrode material and the second individual electrode (6b) of the reference electrode (6) consists of the second electrode material.

2. Multi-gas sensor according to Claim 1,
wherein the second working electrode (5) is arranged between the gas inlet (1, 2) and the second individual electrode (6b) of the reference electrode (6), wherein preferably the housing (3) comprises a first (1) and a second (2) gas inlet, and
the first working electrode (4) is arranged between the first gas inlet (1) and the first individual electrode (6a) of the reference electrode (6), which comprises the first electrode material, and
the second working electrode (5) is arranged between the second gas inlet (2) and the second individual electrode (6b) of the reference electrode (6), which comprises the second electrode material.

3. Multi-gas sensor according to at least one of the preceding claims,
wherein the two electrode materials are each selected differently from one another from: palladium, iridium, carbon, platinum and rhodium,
wherein the first electrode material is preferably platinum.

4. Multi-gas sensor according to at least one of the preceding claims, wherein the first working electrode (4), the second working electrode (5) and the two individual electrodes (6a, 6b) of the reference electrode (6) each have the shape of a disc, in particular a circular or oval disc.

5. Multi-gas sensor according to at least one of the preceding claims, wherein
a) the first gas inlet (1), the first working electrode (4) and the first individual electrode (6a) and
b) the second gas inlet (2), the second working electrode (5), and the second individual electrode (6b),
arranged one above another in each case form a stack arrangement.

6. Multi-gas sensor according to Claim 5,
wherein a counterelectrode (7) is part of both stacks and forms the determination of the respective stack.

7. Multi-gas sensor according to at least one of the preceding claims, wherein the first working electrode (4) has a larger effective area with electrode material than the first individual electrode (6a), and preferably when viewed from the first gas inlet (1) the first working electrode (4) covers, in particular completely, the first individual electrode (6a).

8. Multi-gas sensor according to at least one of the preceding claims, wherein the second working electrode (5) has a larger effective area with electrode material than the second individual electrode (6b), and preferably when viewed from the second gas inlet (2) the second working electrode (5) covers, in particular completely, the second individual electrode (6b).

9. Multi-gas sensor according to at least one of the preceding claims, wherein the individual electrodes (6a, 6b) are electrically connected by a conductor and the conductor is preferably insulated from the electrolyte (8) and with further preference is composed of platinum.

10. Multi-gas sensor according to at least one of the preceding claims, wherein the electrode material of the individual electrodes (6a, 6b) has an average thickness of 50 - 400 µm, preferably 100 to 250 µm.

11. Multi-gas sensor according to at least one of the preceding claims, wherein the effective area of the respective individual electrode (6a, 6b) is smaller by at least 15%, preferably at least 30%, in relation to the associated working electrode (4, 5).

12. Multi-gas sensor according to at least one of the preceding claims, wherein the multi-gas sensor comprises a bipotentiostat (13).

13. Multi-gas sensor according to at least one of the preceding claims, wherein the housing (3) comprises at least two spatially separated chambers,
wherein the chambers each contain at least one gas inlet (1, 2) and a pair constituted by working electrode (4, 5) and individual electrode (6a, 6b) and preferably the chambers each contain different electrolytes (8).

14. Method for quantitatively or qualitatively determining two target gases simultaneously alongside one another using the multi-gas sensor according to at least one of the preceding claims, wherein the target gases are preferably H₂S and CO.

## Revendications

1. Capteur à gaz multiples, comprenant
• un boîtier (3) pourvu d'au moins une entrée de gaz (1, 2),
• une première électrode de travail (4) d'un premier matériau d'électrode,
• une deuxième électrode de travail (5) d'un deuxième matériau d'électrode, le deuxième matériau d'électrode étant différent du premier matériau d'électrode,
• au moins une électrode de référence (6), l'électrode de référence (6) présentant une première électrode individuelle (6a) et séparément de celle-ci une deuxième électrode individuelle (6b), et les deux électrodes individuelles étant reliées de manière électriquement conductrice,
• un électrolyte (8) à l'intérieur du boîtier (3), l'électrolyte (8) étant respectivement en contact avec le premier matériau d'électrode de la première électrode de travail (4), le deuxième matériau d'électrode de la deuxième électrode de travail (5) et les matériaux d'électrode des deux électrodes individuelles de l'électrode de référence (6),
dans lequel la première électrode de travail (4) est disposée entre ladite au moins une entrée de gaz (1, 2) et la première électrode individuelle (6a) de l'électrode de référence (6),
**caractérisé en ce que** la première électrode individuelle (6a) de l'électrode de référence (6) est composée du premier matériau d'électrode et la deuxième électrode individuelle (6b) de l'électrode de référence (6) est composée du deuxième matériau d'électrode.

2. Capteur à gaz multiples selon la revendication 1,
dans lequel la deuxième électrode de travail (5) est disposée entre l'entrée de gaz (1, 2) et la deuxième électrode individuelle (6b) de l'électrode de référence (6),
dans lequel le boîtier (3) présente de préférence une première (1) et une deuxième (2) entrée de gaz, et
la première électrode de travail (4) est disposée entre la première entrée de gaz (1) et la première électrode individuelle (6a) de l'électrode de référence (6) qui présente le premier matériau d'électrode, et
la deuxième électrode de travail (5) est disposée entre la deuxième entrée de gaz (2) et la deuxième électrode individuelle (6b) de l'électrode de référence (6) qui présente le deuxième matériau d'électrode.

3. Capteur à gaz multiples selon au moins l'une des revendications précédentes,
dans lequel les deux matériaux d'électrode sont respectivement sélectionnés différemment l'un de l'autre parmi : le palladium, l'iridium, le carbone, le platine et le rhodium,
dans lequel le premier matériau d'électrode est de préférence du platine.

4. Capteur à gaz multiples selon au moins l'une des revendications précédentes, dans lequel la première électrode de travail (4), la deuxième électrode de travail (5) et les deux électrodes individuelles (6a, 6b) de l'électrode de référence (6) présentent respectivement la forme d'un disque, en particulier d'un disque circulaire ou ovale.

5. Capteur à gaz multiples selon au moins l'une des revendications précédentes, dans lequel
a) la première entrée de gaz (1), la première électrode de travail (4) et la première électrode individuelle (6a), et
b) la deuxième entrée de gaz (2), la deuxième électrode de travail (5) et la deuxième électrode individuelle (6b),
disposées les unes au-dessus des autres, constituent un agencement empilé.

6. Capteur à gaz multiples selon la revendication 5, dans lequel une contre-électrode (7) fait partie des deux piles et constitue la terminaison de la pile respective.

7. Capteur à gaz multiples selon au moins l'une des revendications précédentes, dans lequel la première électrode de travail (4) présente une plus grande surface active avec du matériau d'électrode que la première électrode individuelle (6a), et de préférence, vu à partir de la première entrée de gaz (1), la première électrode de travail (4) recouvre, en particulier complètement, la première électrode individuelle (6a).

8. Capteur à gaz multiples selon au moins l'une des revendications précédentes, dans lequel la deuxième électrode de travail (5) présente une plus grande surface active avec un matériau d'électrode que la deuxième électrode individuelle (6b) et de préférence, vu à partir de la deuxième entrée de gaz (2), la deuxième électrode de travail (5) recouvre, en particulier complètement, la deuxième électrode individuelle (6b).

9. Capteur à gaz multiples selon au moins l'une des revendications précédentes, dans lequel les électrodes individuelles (6a, 6b) sont reliées électriquement par un conducteur, et le conducteur est isolé de préférence par rapport à l'électrolyte (8) et est de plus grande préférence composé de platine.

10. Capteur à gaz multiples selon au moins l'une des revendications précédentes, dans lequel le matériau d'électrode des électrodes individuelles (6a, 6b) présente une épaisseur moyenne de 50 à 400 µm, de préférence de 100 à 250 µm.

11. Capteur à gaz multiples selon au moins l'une des revendications précédentes, dans lequel la surface active de l'électrode individuelle (6a, 6b) respective est plus petite d'au moins 15 %, de préférence d'au moins 30 %, par rapport à l'électrode de travail associée (4, 5).

12. Capteur à gaz multiples selon au moins l'une des revendications précédentes, dans lequel le capteur à gaz multiples présente un bipotentiostat (13).

13. Capteur à gaz multiples selon au moins l'une des revendications précédentes,
dans lequel le boîtier (3) comprend au moins deux chambres physiquement séparées,
dans lequel les chambres contiennent respectivement au moins une entrée de gaz (1, 2) et une paire d'électrodes de travail (4, 5) et une électrode individuelle (6a, 6b), et de préférence respectivement des électrolytes différents (8) sont contenus dans les chambres.

14. Procédé de détermination quantitative ou qualitative de deux gaz cibles en même temps côte à côte à l'aide du capteur à gaz multiples selon au moins l'une des revendications précédentes, les gaz cibles étant de préférence du H₂S et du CO.
